(19) Europäisches Patentamt
European Patent Office
Office européen des brevets

(11) **EP 4 275 832 B1**

(12) **EUROPEAN PATENT SPECIFICATION**

(45) Date of publication and mention
of the grant of the patent:
**31.12.2025   Bulletin 2026/01**

(21) Application number: **22755901.0**

(22) Date of filing: **28.01.2022**

(51) International Patent Classification (IPC):
**B23K 26/342** (2014.01)   **B33Y 10/00** (2015.01)
**B33Y 30/00** (2015.01)   **B33Y 50/02** (2015.01)
**B23K 9/032** (2006.01)   **B23K 9/04** (2006.01)
**B23K 9/12** (2006.01)   **B23K 10/02** (2006.01)
**B23K 15/00** (2006.01)   **B22F 10/36** (2021.01)
**B22F 10/366** (2021.01)   **B22F 10/25** (2021.01)
**B22F 10/85** (2021.01)

(52) Cooperative Patent Classification (CPC):
(C-Sets available)
**B23K 9/04; B22F 10/25; B22F 10/36; B22F 10/366;**
**B22F 10/85; B23K 10/027; B23K 15/0086;**
**B23K 26/342; B33Y 10/00; B33Y 50/02;**
Y02P 10/25                                (Cont.)

(86) International application number:
**PCT/JP2022/003449**

(87) International publication number:
**WO 2022/176578 (25.08.2022 Gazette 2022/34)**

(54) **METHOD FOR PREPARING LAMINATION PLAN**

VERFAHREN ZUR HERSTELLUNG EINES LAMINIERUNGSPLANS

PROCÉDÉ DE PRÉPARATION DE PLAN DE STRATIFICATION

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:  **19.02.2021   JP 2021025576**

(43) Date of publication of application:
**15.11.2023   Bulletin 2023/46**

(73) Proprietor: **KABUSHIKI KAISHA KOBE SEIKO**
**SHO (KOBE STEEL, LTD.)**
**Hyogo 651-8585 (JP)**

(72) Inventor: **HUANG, Shuo**
**Kobe-shi, Hyogo 651-2271 (JP)**

(74) Representative: **Müller-Boré & Partner**
**Patentanwälte PartG mbB**
**Friedenheimer Brücke 21**
**80639 München (DE)**

(56) References cited:
WO-A1-2020/250446      WO-A1-2021/064952
WO-A1-2022/064941      CN-A- 111 037 046
CN-A- 111 037 051      JP-A- 2017 227 977
JP-A- 2021 016 879

(52) Cooperative Patent Classification (CPC): (Cont.)

C-Sets
B22F 2999/00, B22F 10/30, B22F 12/50

## Description

### TECHNICAL FIELD

The present disclosure relates to a deposition planning method, a deposition plan making apparatus, and a program for an additively manufactured object formed by depositing weld beads.

### BACKGROUND ART

Recently, needs for forming using a 3D printer as a production means have increased, and research and development for the practical use of forming using a metallic material has progressed. The 3D printer that forms a metallic material prepares an additively manufactured object by melting a metal powder and a metal wire using a laser, an electron beam, or a heat source such as an arc and depositing the molten metal. For example, Patent Literature 1 discloses a deposition design method in which, when an additively manufactured object is manufactured by depositing weld beads obtained by melting and solidifying a wire-like metallic material (filler metal), a manufacturing process of the additively manufactured object is evaluated by a simulation, welding paths and welding conditions are adjusted to be optimal, and a welding apparatus is controlled for forming under the adjusted conditions.

### CITATION LIST

### PATENT LITERATURE

Patent Literature 1: JP2010-201474A
Patent Literature 2: JP2019-111582A Patent Literature 3: CN 111 037 051 A

### SUMMARY OF INVENTION

### TECHNICAL PROBLEM

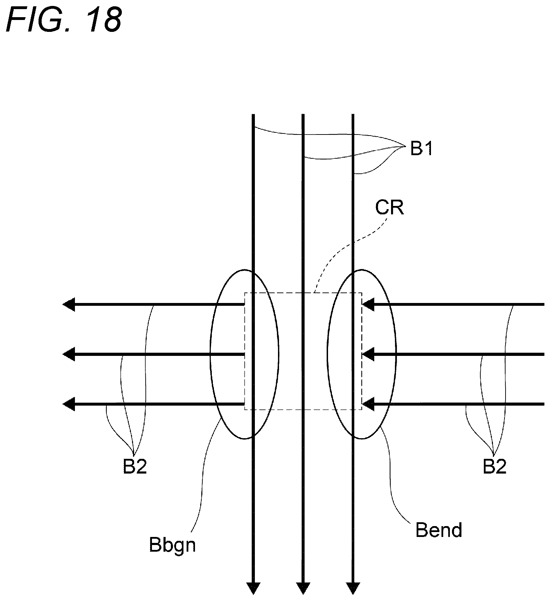

Incidentally, when an additively manufactured object is formed by depositing a plurality of weld beads by arc welding, an intersection portion where the weld beads are overlap each other depending on the shape of the additively manufactured object is formed. When the intersection portion is formed, for example, a method of subsequently forming a weld bead B2 with respect to a weld bead B1 in a direction orthogonal to the weld bead B1 as illustrated in Fig. 18 is used, the weld bead B1 being formed in one direction. In this case, the formation of the weld bead B2 is stopped immediately before the previously formed weld bead B1, and the weld bead B2 is formed again from a position after passing the weld bead B1. As a result, an intersection portion CR is formed. However, in this method, a gap is formed between an end edge $B_{end}$ and a start edge $B_{bgn}$ of the weld bead B2, and an internal defect is likely to be generated in the additively manufactured object after forming. In order to suppress the internal defect, it is necessary to set the welding conditions using many tuning parameters.

In addition, in a technique of Patent Literature 2, in a manufacturing process including a contour forming step of forming a contour of an additively manufactured object and a filling pattern welding step of filling the inside of the contour, at an intersection point where the filling pattern encounters the contour, welding conditions change to prevent an amount of a metallic material where the contour is distorted from being welded to the intersection point. Even in this case, the setting of the welding conditions is complicated, and enormous effort is required to form the intersection portion without any problems.

Accordingly, an object of the present disclosure is to provide a deposition planning method, a deposition plan making apparatus, and a program for an additively manufactured object, in which the occurrence of an internal defect in an intersection portion where weld beads intersect with each other can be prevented, and the beads can be formed at a uniform deposition height. Patent literature 3 discloses a deposition planning method for an additively manufactured object according to the preamble of appended claim 1.

### SOLUTION TO PROBLEM

The present disclosure has the following configurations.

(1) A deposition planning method for an additively manufactured object, in which the additively manufactured object is formed using shape data representing a three-dimensional shape of the additively manufactured object by an additive manufacturing apparatus that deposits weld beads obtained by melting and solidifying a filler metal, the deposition planning method including:

a step of acquiring the shape data;

a step of determining a plurality of welding paths along which each of layers sliced from the three-dimensional shape of the additively manufactured object represented by the shape data is formed using the weld beads;

a step of classifying the plurality of the welding paths in the same layer of each of the layers into intersection region paths corresponding to an intersection portion and constant region paths corresponding to constant portions other than the intersection portion, the intersection portion being formed by intersection of a portion where a plurality of the weld beads are formed adjacent to each other with another plurality of the weld beads;

a step of dividing each of the intersection region paths into a lower layer path along which a lower layer of the intersection portion is formed and an upper layer path along which an upper layer of the intersection portion is formed; and

a step of determining welding conditions of the intersection region paths such that an upper layer deposit amount per unit length of weld beads formed along the upper layer path is more than a lower layer deposit amount per unit length of weld beads formed along the lower layer path, a sum of the upper layer deposit amount and the lower layer deposit amount is equal to a deposit amount per unit length of weld beads formed along the constant region paths, and in a cross-section orthogonal to a longitudinal direction of the weld beads formed along the upper layer path, profiles of the weld beads adjacent to each other overlap each other, wherein in the step of determining the welding conditions of the intersection region paths, when the lower layer deposit amount is represented by S1 and the upper layer deposit amount is represented by S2, a ratio S1 / (S1 + S2) of the lower layer deposit amount S1 to a total deposit amount (S1 + S2) is set depending on a gap between a plurality of the weld beads in the intersection portion.

(2) A deposition plan making apparatus that makes a deposition plan in which an additively manufactured object is formed using shape data representing a three-dimensional shape of the additively manufactured object by an additive manufacturing apparatus that deposits weld beads obtained by melting and solidifying a filler metal, the deposition plan making apparatus including:

a data acquisition unit configured to acquire the shape data;

a welding path determination unit configured to determine a plurality of welding paths along which each of layers sliced from the three-dimensional shape of the additively manufactured object represented by the shape data is formed using the weld beads;

a welding path classification unit configured to classify the plurality of the welding paths in the same layer of each of the layers into intersection region paths corresponding to an intersection portion and constant region paths corresponding to constant portions other than the intersection portion, the intersection portion being formed by intersection of a portion where a plurality of the weld beads are formed adjacent to each other with another plurality of the weld beads;

an upper and lower layer division unit configured to divide each of the intersection region paths into a lower layer path along which a lower layer of the intersection portion is formed and an upper layer path along which an upper layer of the intersection portion is formed; and

a welding condition determination unit configured to determine welding conditions of the intersection region paths such that an upper layer deposit amount per unit length of weld beads formed along the upper layer path is more than a lower layer deposit amount per unit length of weld beads formed along the lower layer path, a sum of the upper layer deposit amount and the lower layer deposit amount is equal to a deposit amount per unit length of weld beads formed along the constant region paths, and in a cross-section orthogonal to a longitudinal direction of the weld beads formed along the upper layer path, profiles of the weld beads adjacent to each other overlap each other, wherein the welding condition determination unit is configured to determine welding conditions of the intersection region paths such that, when the lower layer deposit amount is represented by S1 and the upper layer deposit amount is represented by S2, a ratio S1 / (S1 + S2) of the lower layer deposit amount S1 to a total deposit amount (S1 + S2) is set depending on a gap between a plurality of the weld beads in the intersection portion.

(3) A program causing a computer to execute an additive manufacturing procedure for an additively manufactured object, in which the additively manufactured object is formed using shape data representing a three-dimensional shape of the additively manufactured object by an additive manufacturing apparatus that deposits weld beads obtained by melting and solidifying a filler metal, the additive manufacturing procedure including:

a function of acquiring the shape data;

a function of determining a plurality of welding paths along which each of layers sliced from the three-dimensional shape of the additively manufactured object represented by the shape data is formed using the weld beads;

a function of classifying the plurality of the welding paths in the same layer of each of the layers into intersection region paths corresponding to an intersection portion and constant region paths corresponding to constant portions other than the intersection portion, the intersection portion being formed by intersection of a portion where a plurality of the weld beads are formed adjacent to each other with another plurality of the weld beads;

a function of dividing each of the intersection region paths into a lower layer path along which a lower layer of the intersection portion is formed and an upper layer path along which an upper layer of the intersection portion is formed; and

a function of determining welding conditions of the intersection region paths such that an upper layer deposit amount per unit length of weld beads formed along the upper layer path is more than a lower layer deposit amount per unit length of weld beads formed along the lower layer path, a sum of the upper layer deposit amount and the lower layer deposit amount is equal to a deposit amount per unit length of weld beads formed along the constant region paths, and in a cross-section orthogonal to a longitudinal direction of the weld beads formed along the upper layer path, profiles of the weld beads adjacent to each other overlap each other, wherein the function of determining welding conditions of the intersection region paths is configured such that, when the lower layer deposit amount is represented by $S1$ and the upper layer deposit amount is represented by $S2$, a ratio $S1 / (S1 + S2)$ of the lower layer deposit amount $S1$ to a total deposit amount $(S1 + S2)$ is set depending on a gap between a plurality of the weld beads in the intersection portion.

ADVANTAGEOUS EFFECTS OF INVENTION

According to the present disclosure, the occurrence of an internal defect in an intersection portion where weld beads intersect with each other can be prevented, and the beads can be formed at a uniform deposition height.

BRIEF DESCRIPTION OF DRAWINGS

Fig. 1 is a schematic configuration diagram illustrating an apparatus for manufacturing an additively manufactured object.

Fig. 2 is a perspective view illustrating a schematic shape of the additively manufactured object including an intersection portion.

Fig. 3 is a functional block diagram illustrating a deposition planning unit.

Figs. 4A and 4B are diagrams illustrating a step of forming the intersection portion using weld beads.

Fig. 5 is a reference diagram illustrating a state where the weld beads are formed along intersection region paths under the same conditions in an upper layer and a lower layer of the intersection portion.

Fig. 6 is a reference diagram illustrating a cross-section of the weld beads taken along line VI-VI illustrated in Fig. 5.

Fig. 7 is a diagram illustrating a state where the weld beads are formed along the intersection region paths under different conditions in the upper layer and the lower layer of the intersection portion.

Fig. 8 is a cross-sectional view of the weld beads taken along line VIII-VIII illustrated in Fig. 7.

Fig. 9 is a diagram illustrating a change timing of a welding rate in the intersection portion.

Fig. 10 is a flowchart illustrating a procedure of making a deposition plan.

Fig. 11 is a diagram illustrating prediction profiles of weld beads in an upper layer and a lower layer of an intersection portion of a sample 1.

Fig. 12 is a diagram illustrating prediction profiles of weld beads in an upper layer and a lower layer of an intersection portion of a sample 2.

Fig. 13 is a diagram illustrating prediction profiles of weld beads in an upper layer and a lower layer of an intersection portion of a sample 3.

Fig. 14 is a diagram illustrating prediction profiles of weld beads in an upper layer and a lower layer of an intersection portion of a sample 4.

Fig. 15 is a diagram illustrating prediction profiles of weld beads in an upper layer and a lower layer of an intersection portion of a sample 5.

Fig. 16 is a diagram illustrating another change timing of the welding rate in the intersection portion.

Figs. 17A and 17B are graphs illustrating a relationship between a feeding rate of a filler metal and a welding rate at the time of restart from the stop of the formation of the weld beads in the lower layer.

Fig. 18 is a diagram illustrating a procedure of forming an intersection portion of weld beads in the related art.

## DESCRIPTION OF EMBODIMENTS

Hereinafter, an embodiment of the present disclosure will be described in detail with reference to the drawings.

<Apparatus for Manufacturing Additively Manufactured Object>

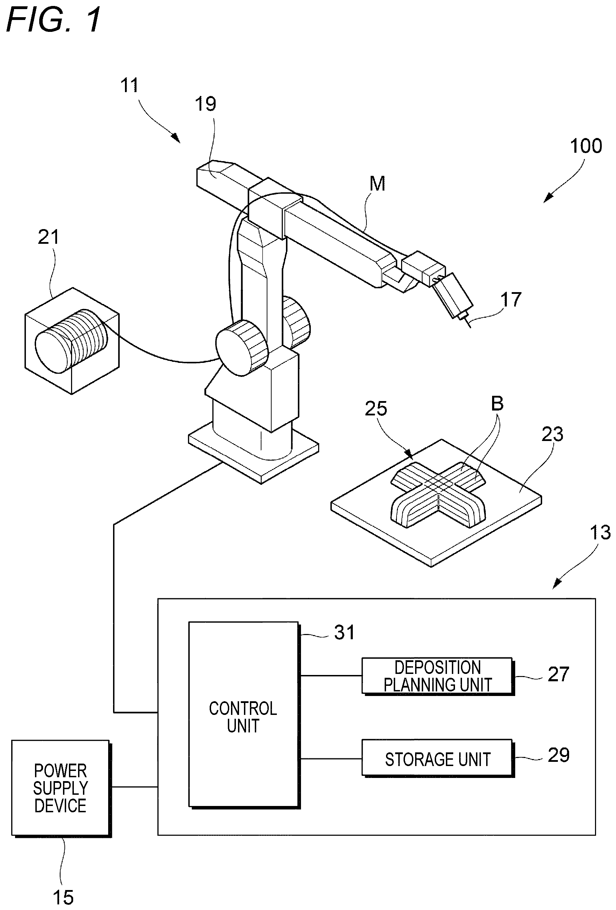

Fig. 1 is a schematic configuration diagram illustrating an apparatus for manufacturing an additively manufactured object.

A manufacturing apparatus 100 of an additively manufactured object having this configuration includes an additive manufacturing apparatus 11, a controller 13 that comprehensively controls the additive manufacturing apparatus 11, and a power supply device 15. The additive manufacturing apparatus 11 includes a welding robot 19 where a torch 17 is provided at a tip axis, and a filler metal supply unit 21 configured to supply a filler metal (welding wire) M to the torch 17. The additive manufacturing apparatus 11 melts and solidifies the filler metal M by arc welding to form weld beads B on a base plate 23, and sequentially deposits the weld beads B to form an additively manufactured object 25. The manufacturing apparatus 100 of an additively manufactured object described herein has one configuration example and may have another configuration.

The welding robot 19 is an articulated robot, and is supported in the torch 17 attached to a tip axis of a robot arm so that the filler metal M can be continuously supplied. Any position and any posture of the torch 17 can be three-dimensionally set in a range of degree of freedom of the robot arm.

The torch 17 includes a shield nozzle (not illustrated) and is supplied with shielding gas from the shield nozzle. An arc welding method used herein may be any of a consumable electrode type such as shielded metal arc welding and $CO_2$ arc welding or a non-consumable electrode type such as TIG welding and plasma arc welding, and is appropriately selected depending on the additively manufactured object to be prepared.

For example, in the consumable electrode type, a contact tip is disposed in the shield nozzle, and the filler metal M to which a melting current is supplied is held in the contact tip. The torch 17 generates an arc from a tip of the filler metal M in a shielding gas atmosphere while holding the filler metal M. The filler metal M is fed from the filler metal supply unit 21 to the torch 17 by a feeding function (not illustrated) attached to the robot arm or the like. When the filler metal M that is continuously fed is melted and solidified while moving the torch 17, the linear weld beads B that is a melt-solidified product of the filler metal M are formed on the base plate 23.

As the filler metal M, various commercially available welding wires can be used. For example, wires defined by solid wires (JIS Z 3312) for MAG and MIG welding of mild steel, high strength steel, and low temperature service steel or flux cored wires (JIS Z 3313) for arc welding of mild steel, high strength steel, and low temperature service steel can be used.

In addition, a heat source that melts the filler metal M is not limited to the above-described arc. For example, a heat source using another method such as a heating method using an arc and a laser in combination, a heating method using a plasma, or a heating method using an electron beam or a laser may be adopted. When the filler metal M is heated by the electron beam or the laser, the amount of heat can be controlled more finely, and the state of the weld beads can be more accurately maintained, which can contribute to further improvement of the quality of the additively manufactured object.

The controller 13 includes a deposition planning unit 27, a storage unit 29, and a control unit 31 to which these units are connected. The controller 13 is configured by a computer device including a CPU, a memory, and a storage.

The deposition planning unit 27 generates a shape model as a target shape based on three-dimensional shape data (for example, CAD data) of the additively manufactured object 25 to be prepared, and slices the obtained shape model into a plurality of weld bead layers corresponding to the heights of the weld beads B. Regarding each of the sliced layers of the shape model, a deposition plan for determining bead formation paths (trajectories of the torch 17 for forming the weld beads B) and welding conditions for forming the weld beads B (including heating conditions or welding conditions such as a welding current or a welding voltage for obtaining a bead width, a bead deposition height, and the like) is made.

That is, the shape model as the target shape is sliced into a plurality of bead models having shapes corresponding to the weld beads, and the bead formation path and the welding conditions in each of the sliced layers are determined. The made deposition plan is stored in the storage unit 29 as a driving program that drives each of the units of the additive manufacturing apparatus 11.

In the manufacturing apparatus 100 of an additively manufactured object having the above-described configuration, the control unit 31 executes the driving program stored in the storage unit 29 to drive the welding robot 19 and the power supply device 15. That is, the controller 13 drives the welding robot 19 according to a procedure set by the driving program, moves the torch 17 along the bead formation path, heats the filler metal M by an arc at the torch tip, and deposits the molten filler metal M on the base plate 23. As a result, the additively manufactured object 25 where the plurality of weld beads B are formed on the base plate 23 is obtained.

The deposition plan and the driving program may be generated by another computer device different from the controller 13 by inputting required information to the other computer device. In this case, the deposition planning unit 27 is configured by a computer device including a CPU, a memory, and a storage, and the information and the driving program about the made deposition plan are input to the storage unit 29 of the controller 13 through an appropriate communication means such as a LAN.

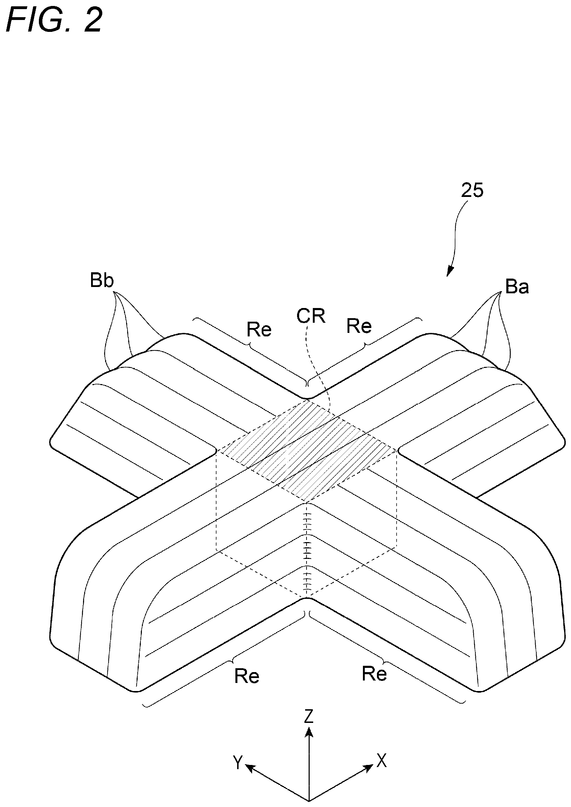

Fig. 2 is a perspective view illustrating a schematic shape of the additively manufactured object 25 including an intersection portion.

For example, the additively manufactured object 25 is formed by depositing plural rows (three rows) of weld beads B1 adjacent to each other that are formed along one direction (X direction) and plural rows (three rows) of weld beads B2 adjacent to each other that are formed along a direction (Y direction) orthogonal to the one direction to form a plurality of layers (three layers) in a height direction (Z direction). A portion (portion surrounded by dotted lines on a bead uppermost layer) where the weld beads B1 and B2 intersect with each other will be referred to as an intersection portion CR, and portions other than the intersection portion CR will be referred to as constant portions RE. An actual additively manufactured object is likely to have a more complicated shape than the above-described shape. Here, the description will be made using the intersection portion CR having a simple shape.

When the deposition plan of the additively manufactured object 25 including the above-described intersection portion CR is made, after forming the weld beads B1 and B2, the deposition height of the intersection portion CR and the deposition height of the constant portion RE match with each other, and the welding conditions of the weld beads are set to suppress the occurrence of an internal defect.

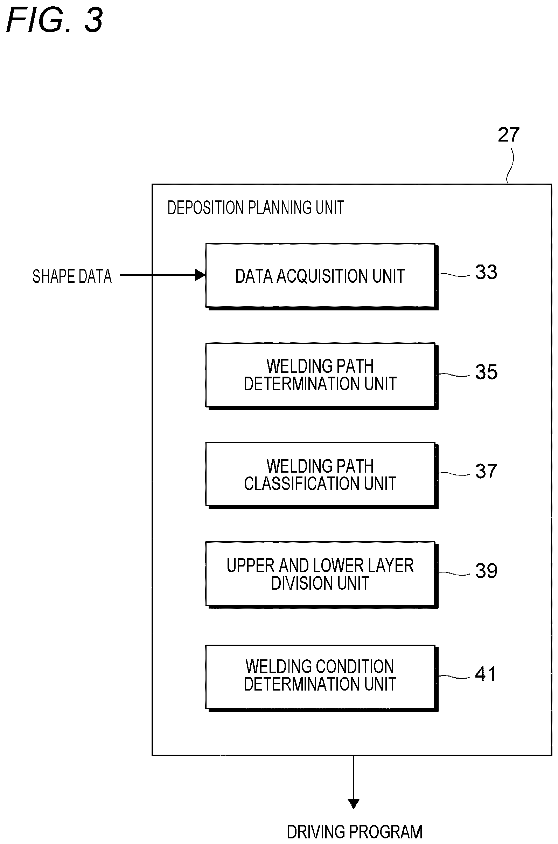

Fig. 3 is a functional block diagram of the deposition planning unit 27.

The deposition planning unit 27 includes a data acquisition unit 33, a welding path determination unit 35, a welding path classification unit 37, an upper and lower layer division unit 39, and a welding condition determination unit 41.

The data acquisition unit 33 acquires shape data of the additively manufactured object 25 as a forming target, the welding path determination unit 35 determines a movement trajectory of the torch 17 illustrated in Fig. 1 based on the shape data, the welding path classification unit 37 and the upper and lower layer division unit 39 extracts and adjusts a welding path of the intersection portion CR, and the welding condition determination unit 41 determines welding conditions with respect to the welding path of the intersection portion CR. Accordingly, the obtained deposition plan is output as data including the information about the deposition plan or as the above-described driving program. The details of the processing content of each of the units will be described below.

<Deposition Planning Method>

Hereinafter, a basic deposition plan made by a deposition planning method will be described.

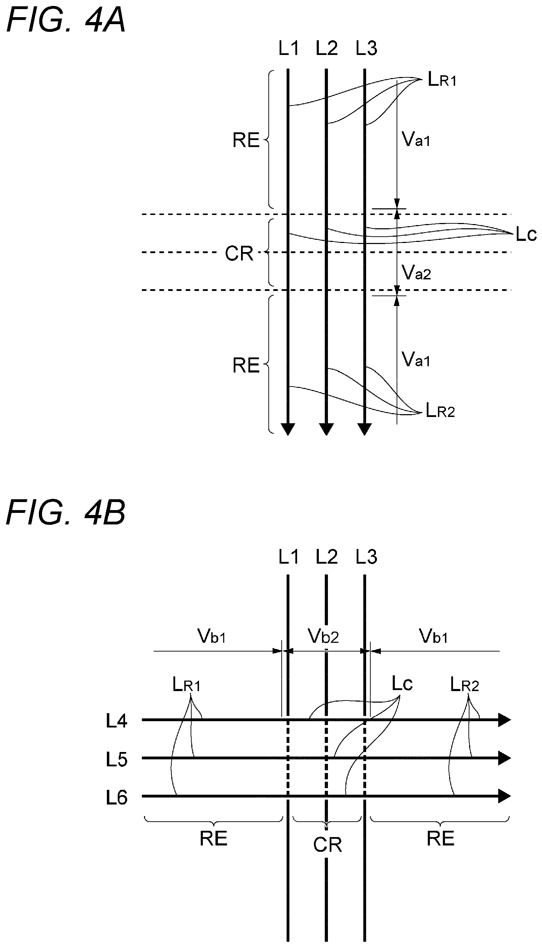

Figs. 4A and 4B are diagrams illustrating a step of forming the intersection portion using the weld beads.

Here, the deposition plan of the additively manufactured object 25 including the intersection portion CR illustrated in Fig. 2 will be described.

Fig. 4A illustrates welding paths (torch movement trajectories) L1, L2, and L3 in which three rows of the weld beads are formed along one direction. In addition, Fig. 4B illustrates welding paths L4, L5, and L6 in which three rows of the weld beads are formed along a direction orthogonal to the above-described welding paths L1, L2, and L3 The number of the rows of the welding paths is any value and, here, is, for example, three.

Each of the welding paths L1 to L6 can be classified into an intersection portion CR where the weld beads intersect with each other and constant portions RE other than the intersection portion CR, welding paths in the regions of the constant portions RE will be referred to as constant region paths $L_{R1}$ and $L_{R2}$, and a welding path in the region of the intersection portion CR will be referred to as intersection region paths $L_C$.

In the welding paths L1, L2, and L3 illustrated in Fig. 4A, a welding rate $V_{a2}$ in the intersection region paths $L_C$ is faster than a welding rate $V_{a1}$ in the constant region paths $L_{R1}$ up to the intersection portion CR and in the constant region paths $L_{R2}$ after passing the intersection portion CR ($V_{a1} < V_{a2}$).

In addition, in the welding paths L4, L5, and L6 illustrated in Fig. 4B, likewise, a welding rate $V_{b2}$ in the intersection region paths $L_C$ is faster than a welding rate $V_{b1}$ in the constant region paths $L_{R1}$ up to the intersection portion CR and in the constant region paths $L_{R2}$ after passing the intersection portion CR ($V_{b1} < V_{b2}$).

When the welding rate increases, the deposit amount per unit length of the formed weld beads decreases, and thus the height of the weld beads decreases. Using this configuration, the welding rate is adjusted such that the sum of the deposit amounts in the intersection region paths $L_C$ of the welding paths L1, L2, and L3 and in the intersection region paths $L_C$ of the welding paths L4, L5, and L6 is equal to the deposit amounts in the constant region paths $L_{R1}$ and $L_{R2}$. As a result, the total height of the weld beads formed along the intersection region paths $L_C$ of the welding paths L1, L2, and L3 and the intersection region paths $L_C$ of the welding paths L4, L5, and L6 that vertically overlap each other is equal to the heights of the weld beads formed in the constant portions RE.

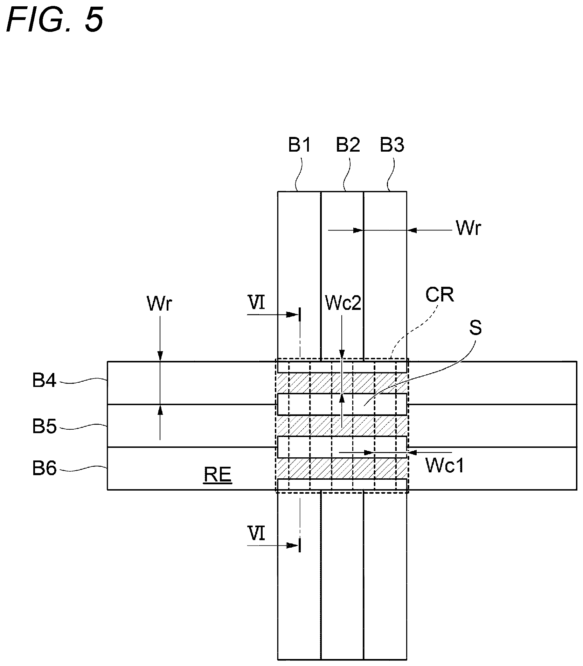

Fig. 5 is a reference diagram illustrating a state where the weld beads are formed along intersection region paths under the same conditions in an upper layer and a lower layer of the intersection portion CR.

As illustrated in Fig. 5, in the intersection portion CR, the intersection region paths $L_C$ of the welding paths L1, L2, and L3 that are previously formed as illustrated in Fig. 4A serve as a lower layer path, and weld beads B1, B2, and B3 are formed. In addition, the intersection region paths $L_C$ of the welding paths L4, L5, and L6 that are subsequently formed as illustrated in Fig. 4B serve as an upper layer path, and weld beads B4, B5, and B6 are formed.

However, as illustrated in Fig. 5, when the sum of the deposit amounts in the lower layer path and the upper layer path is adjusted to be equal to the deposit amount in the constant region paths and the welding rate of the lower layer path and the welding rate of the upper layer path in the intersection portion CR are adjusted to be equal to each other, each of the deposit amounts in the lower layer path and the upper layer path is 1/2 that in the constant region paths. In this case, a bead width $W_{C1}$ of the weld bead formed along the lower layer path and a bead width $W_{C2}$ of the weld bead formed along the upper layer path are less than a bead width Wr of the weld bead formed along the constant region paths, and a gap S where no weld bead is formed is generated in the region of the intersection portion CR.

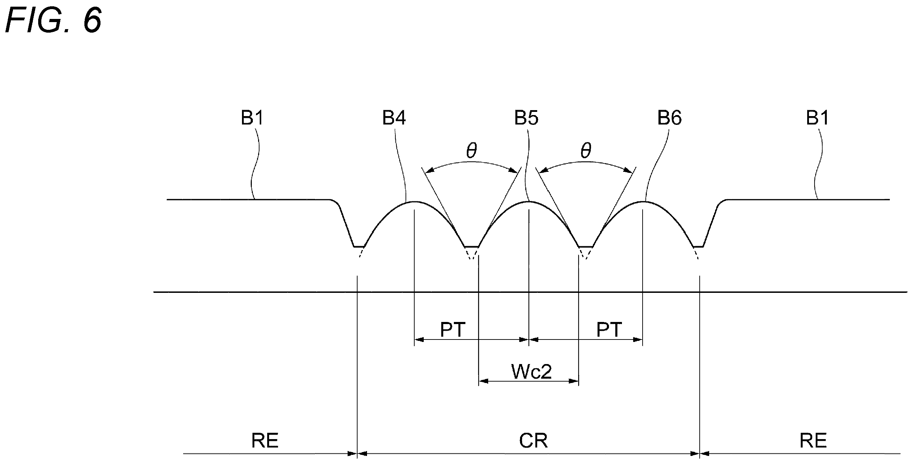

Fig. 6 is a reference diagram illustrating a cross-section of the weld beads taken along line VI-VI illustrated in Fig. 5.

As illustrated in Fig. 6, the weld beads B4, B5, and B6 formed along the upper layer path are formed on the weld bead B1 formed along the lower layer path. All of the bead widths $W_{C2}$ of the weld beads B4, B5, and B6 are narrower than a pitch width PT of a bead center, and an angle θ of a valley portion formed between the weld beads adjacent to each other due to undulation of the beads decreases. This way, the undulation of the weld beads B4, B5, and B6 formed along the upper layer path is formed to rise on a steep slope from the weld bead B1 of the lower layer, and unevenness on a bead surface is deep.

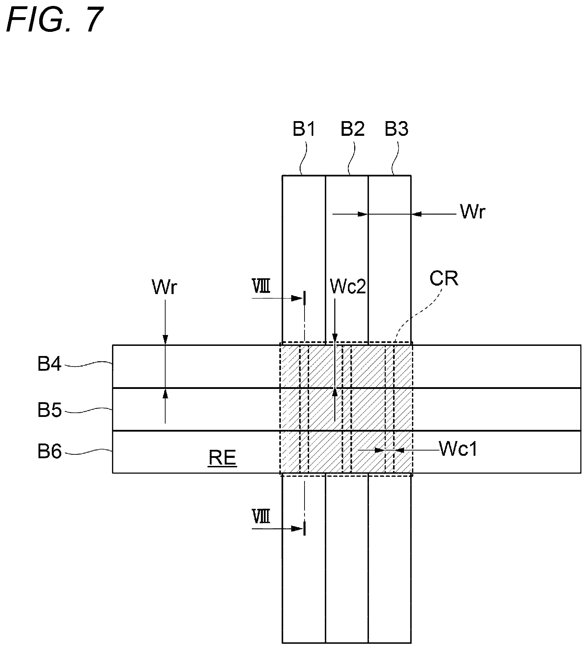

Fig. 7 is a diagram illustrating a state where the weld beads are formed along the intersection region paths under different conditions in the upper layer and the lower layer of the intersection portion CR.

As illustrated in Fig. 7, while the sum of the deposit amounts in the lower layer path and the upper layer path is adjusted to be equal to the deposit amount in the constant region paths, the welding rate of the upper layer path in the intersection portion CR is adjusted to be slower than the welding rate of the lower layer path. As a result, in the intersection portion CR, the bead width $W_{C1}$ of the weld beads B1, B2, and B3 that are previously formed is narrower than the bead width $W_{C1}$ illustrated in Fig. 5. In addition, the bead width $W_{C2}$ of the weld beads B4, B5, and B6 that are subsequently formed is wider than the bead width $W_{C2}$ illustrated in Fig. 5, and the weld beads adjacent to each other overlap each other.

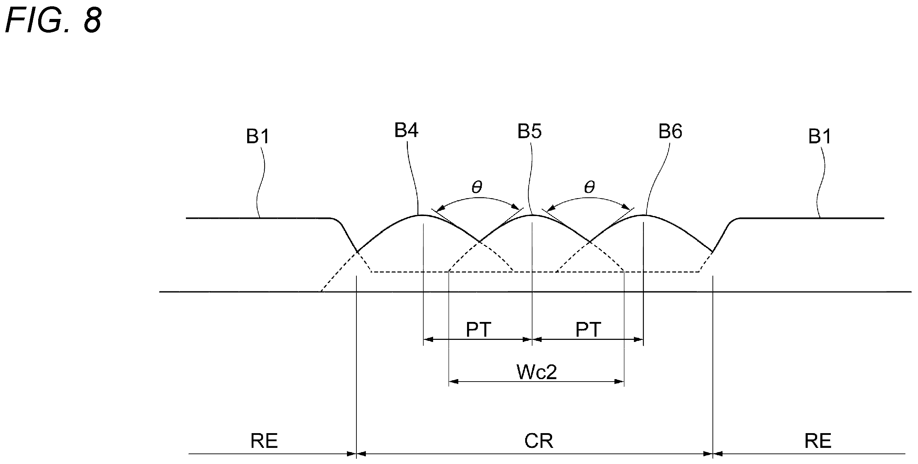

Fig. 8 is a cross-sectional view of the weld beads taken along line VIII-VIII illustrated in Fig. 7.

As illustrated in Fig. 8, in the weld bead B1 formed along the lower layer path, the welding rate is fast, and thus the bead height is low. All of the bead widths $W_{C2}$ of the weld beads B4, B5, and B6 formed along the upper layer path are wider than the pitch width PT of the bead center, and the undulation of the beads is gentle. As a result, the weld beads adjacent to each other overlap each other on the weld bead B1, and the angle θ of the formed valley portion is more than that illustrated in Fig. 6. This way, the undulation of the weld beads B4, B5, and B6 formed along the upper layer path is formed to rise on a gentle slope from the weld bead B1 of the lower layer, and the unevenness on the bead surface is shallow. That is, the weld bead formed along the upper layer path is formed on the weld bead formed along the lower layer path without a gap.

Next, the welding conditions will be described in more detail.

A deposit amount S of the weld bead is represented by Expression (1).

[Numeral 1]

$$S = \frac{V_{Wire}\, \pi\, r^2\, \mu}{V_{weld}} \quad \cdots \quad (1)$$

S: deposit amount (deposit volume per unit length [1 mm])
$V_{wire}$: feeding rate of filler metal [m/min]
$V_{weld}$: welding rate [cm/min]
r: filler metal radius [mm]
μ: weld ratio (typically 1 to 0.98)

The welding conditions of the constant portion can be set, for example, as follows.

$V_{wire}$: 5.2 [m/min]
$V_{weld}$ ($V_{a1}$, $V_{b1}$): 74 [cm/min]
S: 7.8 [mm$^3$]

In the intersection portion CR, it is preferable that the deposit amount of the weld bead formed along the lower layer path is as small as possible. Accordingly, when the welding rate $V_{weld}$ is set to 300 [cm/min] which is a maximum movement speed of the robot that supports the torch, a deposit amount (lower layer deposit amount) S1 of the weld bead formed along the lower layer path is 1.9 mm$^3$. In addition, in order to adjust the deposit amount of the intersection portion CR to be equal to the deposit amount of the constant portion RE, a deposit amount (upper layer deposit amount) S2 of the weld bead formed along the upper layer path is 7.8 - 1.9 = 5.9 mm$^3$ when calculated from Expression (2).

$$S2 = S - S1 \qquad \cdots \qquad (2)$$

In this case, when the welding conditions of the upper layer path are converted and acquired, assuming that the feeding rate of the filler metal is 5.2 [m/min], the welding rate is 97 [cm/min].

In order to make the surface texture of the weld bead uniform, the bead width of the weld bead formed along the upper layer path needs to be controlled not to change as far as possible. Therefore, it is preferable that a ratio S1 / (S1 + S2) of the deposit amounts is as low as possible. In order to set a threshold (upper limit value) for the ratio S1(S1 + S2), for example, a value where a defect starts to occur between the weld beads adjacent to each other may be set as the threshold.

Here, it is considered that, in the intersection portion CR of the weld beads, three rows of weld beads that intersect with each other are formed. As illustrated in Fig. 5, when the upper layer deposit amount S2 of the weld beads B4, B5, and B6 formed along the upper layer path is small, a change in the welding rate $V_{weld}$ when entering the intersection portion CR from the constant portion RE is large (when the welding rate $V_{weld}$ of the constant portion is 74 [cm/min], the welding rate Vweld of the intersection portion is 150 [cm/min]). Therefore, the bead width of the intersection portion CR is less than the bead width of the constant portion RE.

In addition, since the distance between weld beads adjacent to each other does not change, the undulation between the beads increases, and the angle $\theta$ between the valleys decreases. When the angle $\theta$ between the valleys decreases, a thin, deep, and narrow portion is formed, and when the weld bead is continuously deposited on the narrow portion, the narrow portion remains as an internal defect without being melted.

On the other hand, as illustrated in Fig. 7, by reducing a difference between the upper layer deposit amount S2 of the weld beads B4, B5, and B6 formed along the upper layer path and the deposit amount of the constant portion RE, a change in the bead width of the weld beads B4, B5, and B6 formed along the upper layer path is small, and the weld bead having substantially the same shape as that of the constant portion RE is formed. Therefore, an internal defect is not likely to occur without the occurrence of the thin, deep, and narrow portion. In this configuration, the angle $\theta$ between the valleys may be set to be an angle exceeding 40°, preferably an angle exceeding 50°, and more preferably an angle exceeding 60°. The desired angle $\theta$ changes depending on various conditions such as a material or a shape of the manufactured object.

As described above, by setting limited tuning parameters such as the welding rate based on the condition of the deposit amount, forming where the occurrence of an internal defect is prevented can be performed, and deposition conditions for the intersection portion where there are no problems can be easily set.

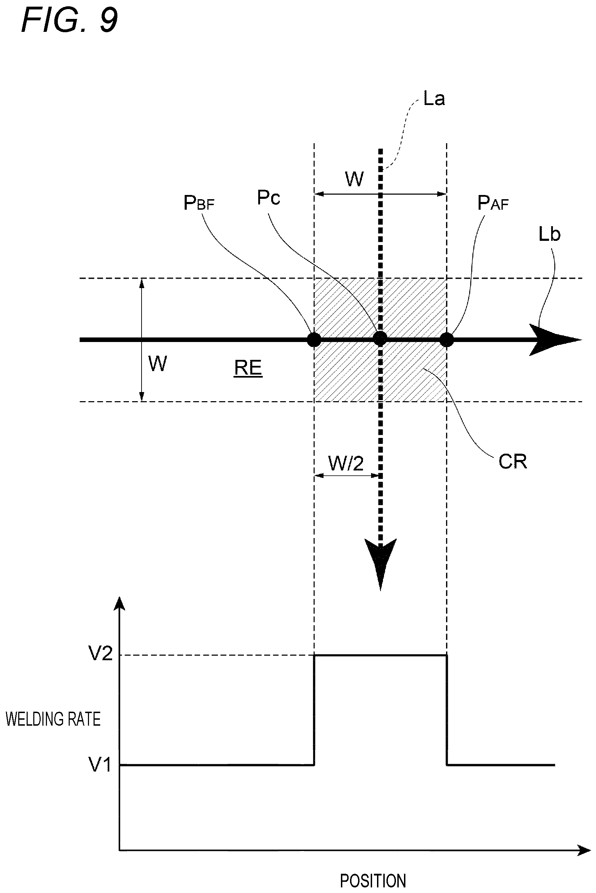

Fig. 9 is a diagram illustrating a change timing of the welding rate in the intersection portion.

When the intersection portion CR of the weld beads is formed along one welding path La and another welding path Lb intersecting with the welding path La, an intersection point Pc between the welding path La and the welding path Lb is acquired from coordinate information of the welding paths. In addition, a bead width W of the weld bead formed along the welding path La is acquired from the above-described information such as the deposit amount.

Here, the intersection portion CR is in a range of a bead width W / 2 centering on the intersection point Pc in front of and behind a welding direction along the welding paths La and Lb. In the intersection portion CR, the welding rate in the intersection region paths $L_C$ is changed from a welding rate V1 to a welding rate V2 in the constant region path. That is, a timing at which the welding rate starts to change is a timing of reaching the intersection portion CR from the constant portion RE in the welding path Lb, that is, a position $P_{BF}$ moved back from the intersection point Pc by a distance of W / 2. In addition, a timing at which the welding rate returns to the welding rate V1 of the constant region path is a position $P_{AF}$ moved forward from the intersection point Pc by a distance of W / 2. As in the welding path La, the welding rate is set to the welding rate V2 in a range from the position moved back from the intersection point Pc along the welding path La by a distance of W / 2 to the position moved forward from the intersection point Pc along the welding path La by a distance of W / 2.

This way, by setting the position where the welding rate changes to the position at the distance that is 1 / 2 of the bead width W from the intersection point Pc, local excess and deficiency in deposit amount in the vicinity of the rate change point can be resolved. Accordingly, the weld bead can be formed in a smooth shape without local unevenness of the additively manufactured object.

<Procedure of Making Deposition Plan>

Next, a procedure of making the deposition plan where the bead formation paths and the welding conditions for forming the additively manufactured object are set will be described in detail.

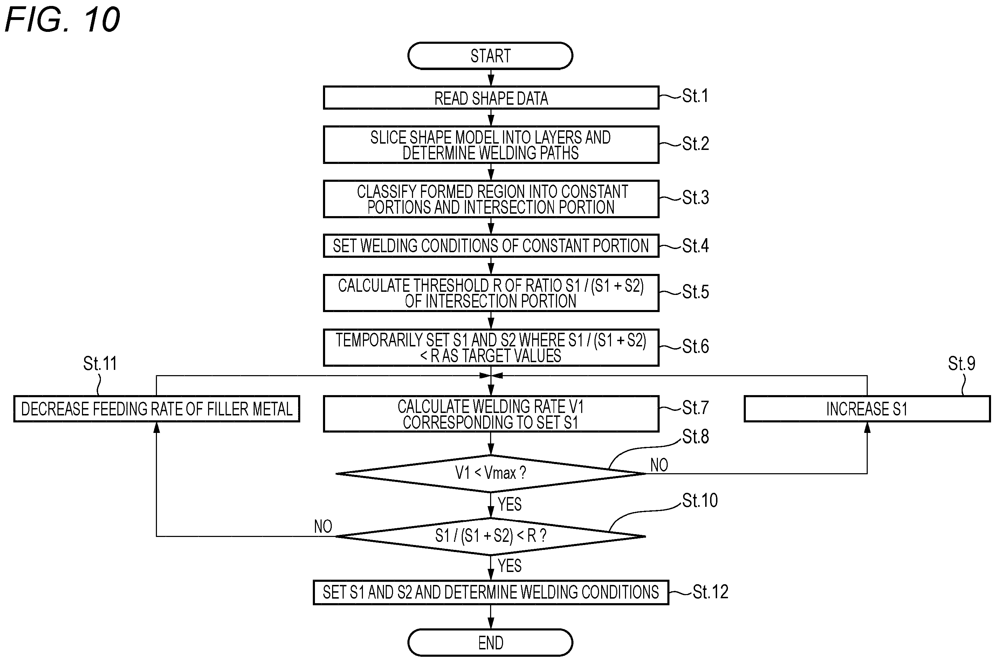

Fig. 10 is a flowchart illustrating the procedure of making the deposition plan. Here, the deposition plan is made by the deposition planning unit 27 illustrated in Fig. 3.

First, the data acquisition unit 33 reads three-dimensional shape data representing a target shape of the additively manufactured object to be prepared (St. 1).

The welding path determination unit 35 generates a three-dimensional shape model based on the acquired shape data, and slices the obtained shape model into layers obtained by forming the weld beads once. That is, the shape model is sliced into a plurality of layers corresponding to the heights of the weld beads B. Regarding each of the obtained plurality of layers, welding paths that are trajectories of the torch 17 (Fig. 1) for forming the weld beads are determined (St. 2).

Next, the welding path classification unit 37 classifies the plurality of welding paths in the same layer of each of the sliced layers into the intersection region paths and the constant region paths corresponding to constant portions other than the intersection portion (St. 3).

Regarding each of the welding paths classified into the constant region paths, the welding condition determination unit 41 sets welding conditions for forming the weld beads (conditions including heating conditions such as a welding current or a welding voltage for obtaining a desired bead width and a desired bead deposition height, a filler metal feeding rate, and the like) (St. 4).

On the other hand, the welding paths classified into the intersection region paths are divided by the upper and lower layer division unit 39 into a lower layer path along which a lower layer of the intersection portion is formed and an upper layer path along which an upper layer of the intersection portion is formed, and the welding conditions are set by the welding condition determination unit 41. Specifically, first, for a ratio between a lower layer deposit amount $S1$ per unit length of the weld beads formed along the lower layer path and an upper layer deposit amount $S2$ per unit length of the weld beads formed along the upper layer path, specifically, for a ratio $S1 / (S1 + S2)$ of the deposit amounts, a threshold $R$ that is a limit value where a defect does not occur is determined by determining whether or not a defect occurs by a simulation or an experimental measurement (St. 5).

When the threshold $R$ is determined, as a specific index, in a cross-section orthogonal to a longitudinal direction of the weld beads, the angle $\theta$ of the valley portion formed between the weld beads adjacent to each other due to the undulation of the plurality of weld beads formed along the upper layer path may be used. This formed shape may be experimentally obtained by actual forming. However, the angle $\theta$ of the valley portion can also be analytically predicted with a sufficient accuracy by setting the cross-sectional shape of the weld beads to a simple shape such as a trapezoidal model.

In addition, as described above, assuming that the limit value of the angle $\theta$ of the valley portion is, for example, 40°, a limit ratio $S1 / (S1 + S2)$ of limit deposit amounts where the angle $\theta$ is 40° or more may be obtained as the threshold $R$. The threshold $R$ may be determined using, for example, table information regarding the occurrence of a defect that is obtained in advance before additive manufacturing.

The lower layer deposit amount $S1$ and the upper layer deposit amount $S2$ may be temporarily set such that the sum of the lower layer deposit amount $S1$ and the upper layer deposit amount $S2$ is equal to a deposit amount per unit length of the weld beads formed along the constant region path and the ratio $S1 / (S1 + S2)$ of the deposit amounts is the predetermined threshold $R$ or less (St. 6). It can be seen that, under welding conditions where the ratio $S1 / (S1 + S2)$ of the deposit amounts is the threshold $R$ or less, as illustrated in Fig. 8, in a cross-section orthogonal to a longitudinal direction of the weld beads formed along the upper layer path, profiles of the weld beads adjacent to each other overlap each other.

Next, based on the temporarily set ratio of the deposit amounts, the welding rate $V2$ (refer to $V_{a2}$ and $V_{b2}$ illustrated in Fig. 4A) of the weld beads formed along the lower layer path is calculated (St. 7). Whether or not the calculated welding rate $V2$ is a maximum rate $V_{max}$ or less that can be implemented by a welding robot is determined ($V2 \leq V_{max}$) (St. 8).

When the welding rate $V2$ exceeds the maximum rate $V_{max}$, the lower layer deposit amount $S1$ is increased (St. 9), and the process restarts from Step St. 7. When the welding rate $V2$ is the maximum rate $V_{max}$ or lower, whether or not the ratio $S1 / (S1 + S2)$ of the deposit amounts is the threshold $R$ or less is determined (St. 10). When the ratio $S1 / (S1 + S2)$ of the deposit amounts exceeds the threshold $R$, the feeding rate $V_{wire}$ of the filler metal is decreased (St. 11), and the process restarts from Step St. 7. When the ratio $S1 / (S1 + S2)$ of the deposit amounts is the threshold $R$ less, the lower layer deposit amount $S1$ and the upper layer deposit amount $S2$ that are temporarily set are fixed, and welding conditions corresponding to $S1$ and $S2$ are determined (St. 12).

<Verification of Ratio of Deposit Amounts>

Here, regarding samples formed with various ratios $S1 / (S1 + S2)$, whether forming is good or bad was determined.

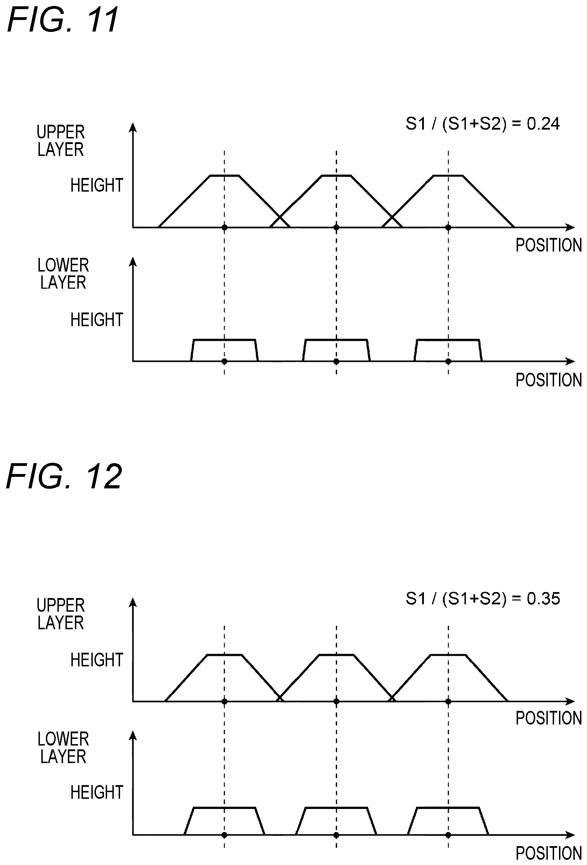

Figs. 11 to 15 are diagrams illustrating prediction profiles of weld beads in upper layers and lower layers of intersection portions of samples 1 to 5. The ratio $S1 / (S1 + S2)$, the welding rate, and the determination result of whether or not forming is good or bad of each of the samples 1 to 5 are collectively shown in Table 1.

[Table 1]

| | Ratio S1 / ( S1 + S2) | Lower Layer Welding Rate [cm/min] | Upper Layer Welding Rate [cm/min] | Good or Bad Determination |
|---|---|---|---|---|
| Sample 1 | 0.24 | 300 | 97 | O |
| Sample 2 | 0.35 | 210 | 113 | O |
| Sample 3 | 0.38 | 190 | 120 | O |
| Sample 4 | 0.41 | 180 | 125 | X |
| Sample 5 | 0.50 | 150 | 150 | X |

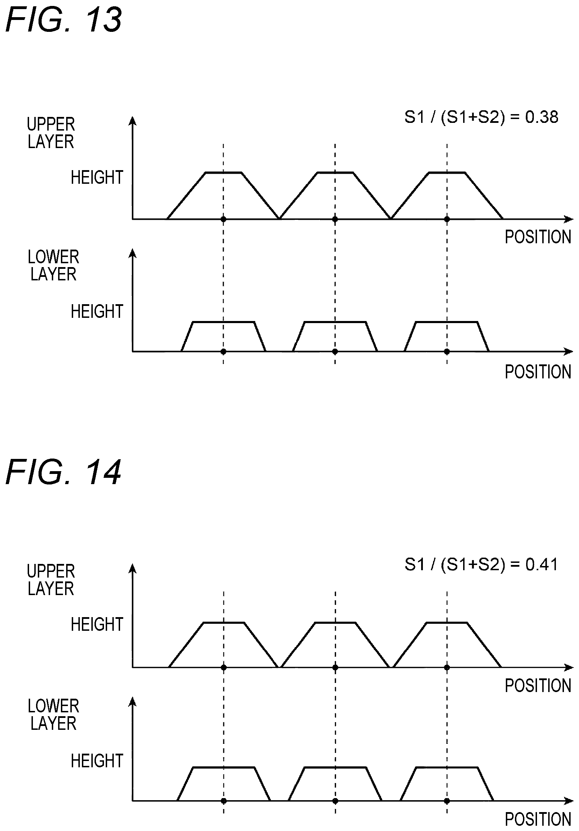

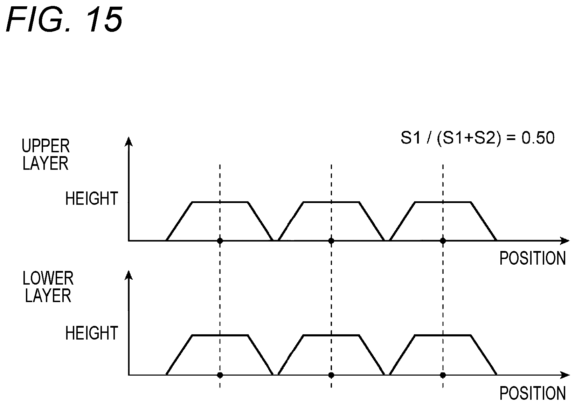

The weld beads of the upper layer of each of the samples 1 to 3 illustrated in Figs. 11 to 13 include an overlapping portion where beads adjacent to each other overlap each other on the weld beads of the lower layer. On the other hand, in the weld beads of the upper layer of each of the samples 4 and 5 illustrated in Figs. 14 and 15, the overlapping portion is not formed on the weld beads of the lower layer.

It can be determined from the above results that, when the ratio S1 / (S1 + S2) in the samples 1 to 3 is 0.4 or less, a welding defect does not occur, and it can be determined from the above results that, when the ratio S1 / (S1 + S2) in the samples 4 and 5 exceeds 0.4, a gap is generated between the weld beads of the upper layer such that an internal defect may occur. This way, when various conditions such as a material or a shape of the manufactured object are determined, a limit value of the ratio where an internal defect may occur is acquired.

<Other Setting Examples of Welding Rate>

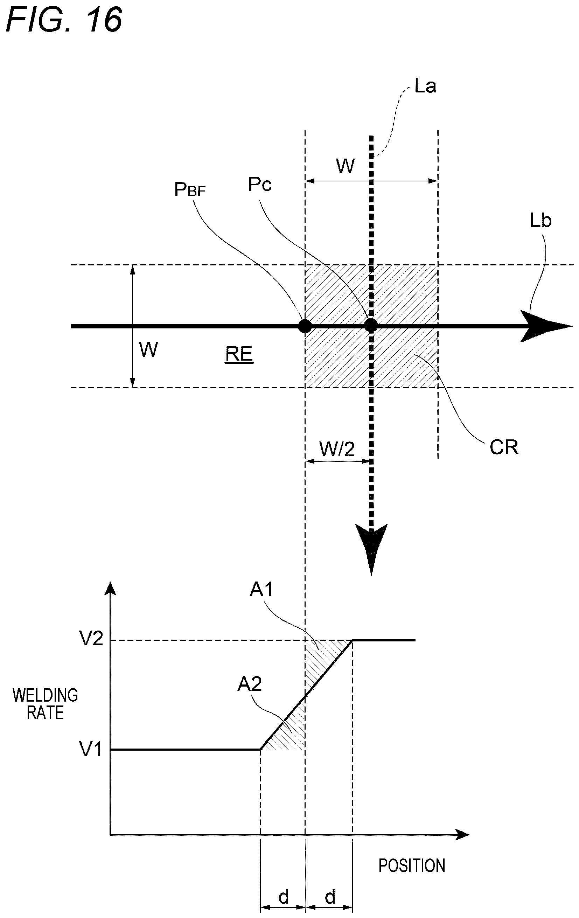

Fig. 16 is a diagram illustrating another change timing of the welding rate in the intersection portion.

Weld beads are formed along one welding path La and another welding path Lb intersecting with the welding path La. At this time, a position moved back from the intersection point Pc between the welding path La and the welding path Lb along the welding path La by a distance that is 1 / 2 of the bead width W of the weld bead formed along the welding path La is represented by $P_{BF}$. The welding rate changes with this position $P_{BF}$ as a center position in a range from a change start point to a change end point of the welding rate.

That is, the welding rate is gradually increased from V1 of the constant region path to V2 of the intersection region path such that the areas of diagonally hatched triangles A1 and A2 having a width d centering on the position $P_{BF}$ in Fig. 16 are equal to each other. The width d is set in a range of $0 < d \leq W / 2$. This way, by changing the welding rate in a range of $\pm d$ centering on the position moved back from the intersection point Pc along the welding path Lb by the distance that is 1 / 2 of the bead width W, the widths of the weld beads to be formed can be easily made uniform, and a uniform bead width can be stably obtained. In addition, even when the welding rate returns to V1 from V2, the welding rate may change in a range of $\pm d$ centering on a position moved forward along the welding path Lb by the distance that is 1 / 2 of the bead width W.

<Formation of Intersection Portion Using Only Weld Beads of Upper Layer>

In the above-described additive manufacturing procedure, the intersection portion is formed by causing the weld beads of the lower layer and the weld beads of the upper layer to overlap each other. However, the intersection portion may be formed using only the weld beads of the upper layer by stopping the formation of the weld beads of the lower layer while keeping the welding path continuous.

For example, in a period of the intersection region paths $L_C$ of the welding paths L1, L2, and L3 illustrated in Fig. 4A, the formation of the weld beads of the lower layer is stopped by setting the feeding rate of the filler metal in the lower layer path to 0 to stop the supply of the filler metal. At a position where the bead formation is stopped, the weld beads are formed along the upper layer path by setting welding conditions such that the deposit amount thereof is equal to the deposit amount of the weld bead of the constant region path.

At this time, it is preferable that, at the time of restart after temporarily stopping the formation of the weld beads along the lower layer path, the feeding rate of the filler metal is controlled in synchronization with the change in the welding rate.

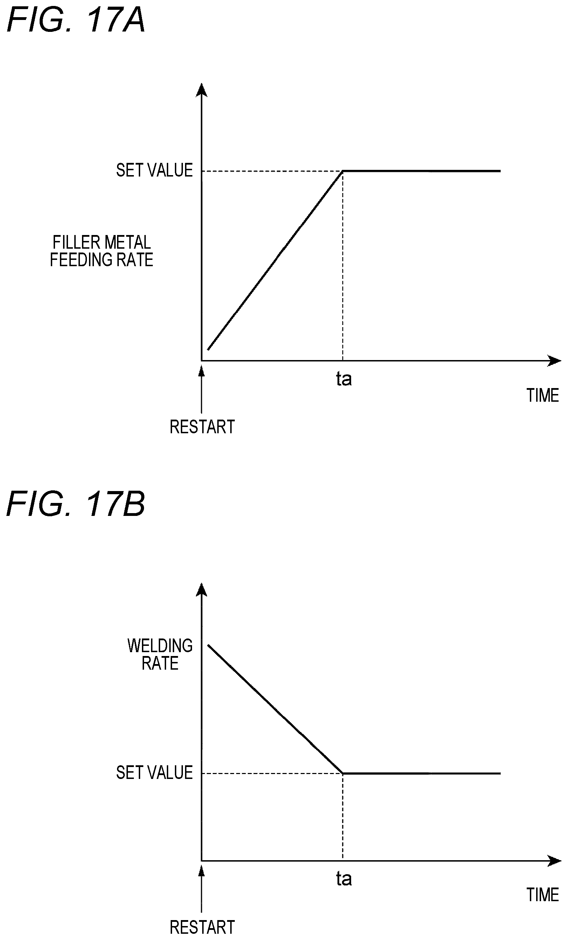

Figs. 17A and 17B are graphs illustrating a relationship between the feeding rate of the filler metal and the welding rate at the time of the restart from the stop of the formation of the weld beads in the lower layer.

As illustrated in Fig. 17A, the feeding rate of the filler metal is 0 at the time of the restart but is gradually increased to a set feeding rate until time ta. Along with the gradual increase in the feeding rate, the welding rate is gradually decreased as illustrated in Fig. 17B. That is, the welding rate is increased in the lower layer path at the time of the restart but is gradually decreased to the set welding rate in the constant region path until time ta. As a result, in the period from the restart to time ta, the welding rate is decreased while increasing the feeding rate of the filler metal. Therefore, the supply amount of the filler metal per unit length is uniform, and uniform weld beads can be formed.

The deposit amount may be maintained to be as small as possible while causing the torch to generate a minimum arc without completely stopping the formation of the weld beads along the lower layer path. Even in this case, a state close to a case where the formation of the weld beads of the lower layer is substantially completely stopped is obtained.

REFERENCE SIGNS LIST

> 11: additive manufacturing apparatus
> 13: controller
> 15: power supply device
> 17: torch
> 19: welding robot
> 21: filler metal supply unit
> 23: base plate
> 25: additively manufactured object
> 27: deposition planning unit
> 29: storage unit
> 31: control unit
> 33: data acquisition unit
> 35: welding path determination unit
> 37: welding path classification unit
> 39: upper and lower layer division unit
> 41: welding condition determination unit
> 100: manufacturing apparatus
> B, B1, B2, B3, B4, B5, B6: weld bead
> CR: intersection portion
> 11, L2, L3, L4, L5, L6, La, Lb: welding path
> $L_C$: intersection region path
> $L_{R1}$, $L_{R2}$: constant region path
> M: filler metal (welding wire)
> $P_C$: intersection point
> RE: constant portion
> S: deposit amount
> S1: lower layer deposit amount (deposit amount)
> S2: upper layer deposit amount (deposit amount)
> V1, V2, $V_{a1}$, $V_{a2}$, $V_{b1}$, $V_{b2}$: welding rate
> θ: angle

**Claims**

1. A deposition planning method for an additively manufactured object (25), in which the additively manufactured object (25) is formed using shape data representing a three-dimensional shape of the additively manufactured object (25) by an additive manufacturing apparatus (11) that deposits weld beads (B) obtained by melting and solidifying a filler metal (M), the deposition planning method comprising:

   a step of acquiring the shape data;
   a step of determining a plurality of welding paths along which each of layers sliced from the three-dimensional shape of the additively manufactured object (25) represented by the shape data is formed using the weld beads (B);
   a step of classifying the plurality of the welding paths in the same layer of each of the layers into intersection region paths ($L_C$) corresponding to an intersection portion (CR) and constant region paths ($L_{R1}$, $L_{R2}$) corresponding to constant portions (RE) other than the intersection portion (CR), the intersection portion (CR) being formed by intersection of a portion where a plurality of the weld beads (B) are formed adjacent to each other with another plurality of the weld beads (B);

a step of dividing each of the intersection region paths ($L_C$) into a lower layer path along which a lower layer of the intersection portion (CR) is formed and an upper layer path along which an upper layer of the intersection portion (CR) is formed; and

a step of determining welding conditions of the intersection region paths ($L_C$) such that an upper layer deposit amount (S2) per unit length of weld beads (B) formed along the upper layer path is more than a lower layer deposit amount (S1) per unit length of weld beads (B) formed along the lower layer path, a sum of the upper layer deposit amount (S2) and the lower layer deposit amount (S1) is equal to a deposit amount (S) per unit length of weld beads (B) formed along the constant region paths ($L_{R1}$, $L_{R2}$), and in a cross-section orthogonal to a longitudinal direction of the weld beads (B) formed along the upper layer path, profiles of the weld beads (B) adjacent to each other overlap each other, **characterised in that**

in the step of determining the welding conditions of the intersection region paths ($L_C$), when the lower layer deposit amount (S1) is represented by S1 and the upper layer deposit amount (S2) is represented by S2, a ratio S1 / (S1 + S2) of the lower layer deposit amount S1 to a total deposit amount (S1 + S2) is set depending on a gap between a plurality of the weld beads (B) in the intersection portion (CR).

2. The deposition planning method of an additively manufactured object (25) according to claim 1, wherein in the step of determining the welding conditions of the intersection region paths ($L_C$), the deposit amount (S) changes by changing a welding rate of the upper layer path in the intersection region paths ($L_C$) to be slower than a welding rate of the lower layer path.

3. The deposition planning method of an additively manufactured object (25) according to claim 2, wherein in the process of forming the weld beads (B) from the constant portion (RE) to the intersection portion (CR), the change of the welding rate starts from a position moved back from a center position of the intersection portion (CR) by a length that is half of a bead width of the constant portion (RE) orthogonal to a bead longitudinal direction.

4. The deposition planning method of an additively manufactured object (25) according to claim 2, wherein in the process of forming the weld beads (B) from the constant portion (RE) to the intersection portion (CR), the welding rate changes such that a position moved back from a center position of the intersection portion (CR) by a length that is half of a bead width of the constant portion (RE) orthogonal to a bead longitudinal direction is a center position in a range from a change start point to a change end point of the welding rate.

5. The deposition planning method of an additively manufactured object (25) according to any one of claims 2 to 4, wherein not only the welding rate but also a feeding rate of the filler metal (M) changes.

6. The deposition planning method of an additively manufactured object (25) according to claim 1, wherein in the step of determining the welding conditions of the intersection region paths ($L_C$), in the intersection region paths ($L_C$), the formation of the weld beads (B) along the lower layer path is stopped and the weld beads (B) are formed only along the upper layer path.

7. The deposition planning method of an additively manufactured object (25) according to claim 6, wherein at time of restart from the stop of the formation of the weld beads (B), a feeding rate of the filler metal (M) is set to be lower than a feeding rate before the stop of the formation of the weld beads (B) to gradually increase from the low rate to the feeding rate before the stop of the formation.

8. The deposition planning method of an additively manufactured object (25) according to claim 7, wherein until the feeding rate of the filler metal (M) reaches the feeding rate before the stop of the formation of the weld beads (B) from the restart, a welding rate gradually decreases from a welding rate of the intersection region paths ($L_C$) to a welding rate of the constant region paths ($L_{R1}$, $L_{R2}$).

9. A deposition plan making apparatus that makes a deposition plan in which an additively manufactured object (25) is formed using shape data representing a three-dimensional shape of the additively manufactured object (25) by an additive manufacturing apparatus (11) that deposits weld beads (B) obtained by melting and solidifying a filler metal (M), the deposition plan making apparatus comprising:

a data acquisition unit (33) configured to acquire the shape data;
a welding path determination unit (35) configured to determine a plurality of welding paths along which each of layers sliced from the three-dimensional shape of the additively manufactured object (25) represented by the shape data is formed using the weld beads (B);

a welding path classification unit (37) configured to classify the plurality of the welding paths in the same layer of each of the layers into intersection region paths ($L_C$) corresponding to an intersection portion (CR) and constant region paths ($L_{R1}$, $L_{R2}$) corresponding to constant portions (RE) other than the intersection portion (CR), the intersection portion (CR) being formed by intersection of a portion where a plurality of the weld beads (B) are formed adjacent to each other with another plurality of the weld beads (B);

an upper and lower layer division unit (39) configured to divide each of the intersection region paths ($L_C$) into a lower layer path along which a lower layer of the intersection portion (CR) is formed and an upper layer path along which an upper layer of the intersection portion (CR) is formed; and

a welding condition determination unit (41) configured to determine welding conditions of the intersection region paths ($L_C$) such that an upper layer deposit amount (S2) per unit length of weld beads (B) formed along the upper layer path is more than a lower layer deposit amount (S1) per unit length of weld beads (B) formed along the lower layer path, a sum of the upper layer deposit amount (S2) and the lower layer deposit amount (S1) is equal to a deposit amount (S) per unit length of weld beads (B) formed along the constant region paths ($L_{R1}$, $L_{R2}$), and in a cross-section orthogonal to a longitudinal direction of the weld beads (B) formed along the upper layer path, profiles of the weld beads (B) adjacent to each other overlap each other, **characterised in that**

the welding condition determination unit (41) is configured to determine welding conditions of the intersection region paths ($L_C$) such that, when the lower layer deposit amount (S1) is represented by S1 and the upper layer deposit amount (S2) is represented by S2, a ratio S1 / (S1 + S2) of the lower layer deposit amount S1 to a total deposit amount (S1 + S2) is set depending on a gap between a plurality of the weld beads (B) in the intersection portion (CR).

10. A program causing a computer to execute an additive manufacturing procedure for an additively manufactured object (25), in which the additively manufactured object (25) is formed using shape data representing a three-dimensional shape of the additively manufactured object (25) by an additive manufacturing apparatus (11) that deposits weld beads (B) obtained by melting and solidifying a filler metal (M), the additive manufacturing procedure comprising:

a function of acquiring the shape data;

a function of determining a plurality of welding paths along which each of layers sliced from the three-dimensional shape of the additively manufactured object (25) represented by the shape data is formed using the weld beads (B);

a function of classifying the plurality of the welding paths in the same layer of each of the layers into intersection region paths ($L_C$) corresponding to an intersection portion (CR) and constant region paths ($L_{R1}$, $L_{R2}$) corresponding to constant portions (RE) other than the intersection portion (CR), the intersection portion (CR) being formed by intersection of a portion where a plurality of the weld beads (B) are formed adjacent to each other with another plurality of the weld beads (B);

a function of dividing each of the intersection region paths ($L_C$) into a lower layer path along which a lower layer of the intersection portion (CR) is formed and an upper layer path along which an upper layer of the intersection portion (CR) is formed; and

a function of determining welding conditions of the intersection region paths ($L_C$) such that an upper layer deposit amount (S2) per unit length of weld beads (B) formed along the upper layer path is more than a lower layer deposit amount (S1) per unit length of weld beads (B) formed along the lower layer path, a sum of the upper layer deposit amount (S2) and the lower layer deposit amount (S1) is equal to a deposit amount (S) per unit length of weld beads (B) formed along the constant region paths ($L_{R1}$, $L_{R2}$), and in a cross-section orthogonal to a longitudinal direction of the weld beads (B) formed along the upper layer path, profiles of the weld beads (B) adjacent to each other overlap each other, **characterised in that**

the function of determining welding conditions of the intersection region paths ($L_C$) is configured such that, when the lower layer deposit amount (S1) is represented by S1 and the upper layer deposit amount (S2) is represented by S2, a ratio S1 / (S1 + S2) of the lower layer deposit amount S1 to a total deposit amount (S1 + S2) is set depending on a gap between a plurality of the weld beads (B) in the intersection portion (CR).

**Patentansprüche**

1. Ablagerungsplanungsverfahren für ein additiv gefertigtes Objekt (25), in welchem das additiv gefertigte Objekt (25) unter Verwendung von Formdaten gebildet wird, die eine dreidimensionale Form des additiv gefertigten Objekts (25) darstellen, durch eine additive Fertigungsvorrichtung (11), die Schweißraupen (B) ablagert, die durch Schmelzen und Erstarren eines Füllmetalls (M) erhalten werden, wobei das Ablagerungsplanungsverfahren umfasst:

ein Schritt des Erfassens der Formdaten;

ein Schritt des Bestimmens einer Mehrzahl von Schweißpfaden, entlang welcher jede der Schichten, geschnitten aus der dreidimensionalen Form des additiv gefertigten Objekts (25), dargestellt durch die Formdaten, unter Verwendung der Schweißraupen (B) gebildet wird;

ein Schritt des Klassifizierens der Mehrzahl der Schweißpfade in derselben Schicht jeder der Schichten in Schnittbereichspfade (Lc), die einem Schnittabschnitt (CR) entsprechen, und Konstantbereichspfade ($L_{R1}$, $L_{R2}$), die Konstantabschnitten (RE) anders als der Schnittabschnitt (CR) entsprechen, wobei der Schnittabschnitt (CR) durch Schnitt eines Abschnitts, an welchem eine Mehrzahl der Schweißraupen (B) nebeneinander gebildet wird, mit einer anderen Mehrzahl der Schweißraupen (B) gebildet wird;

ein Schritt des Teilens jeder der Schnittbereichspfade (Lc) in einen unteren Schichtpfad, entlang welchem eine untere Schicht des Schnittabschnitts (CR) gebildet wird, und einen oberen Schichtpfad, entlang welchem eine obere Schicht des Schnittabschnitts (CR) gebildet wird; und

ein Schritt des Bestimmens von Schweißbedingungen der Schnittbereichspfade (Lc), so dass eine Ablagerungsmenge der oberen Schicht (S2) pro Längeneinheit der entlang des oberen Schichtpfads gebildeten Schweißraupen (B) größer ist als eine Ablagerungsmenge der unteren Schicht (S1) pro Längeneinheit der entlang des unteren Schichtpfads gebildeten Schweißraupen (B), eine Summe der Ablagerungsmenge der oberen Schicht (S2) und der Ablagerungsmenge der unteren Schicht (S1) gleich einer Ablagerungsmenge (S) pro Längeneinheit der entlang der Konstantbereichspfade ($L_{R1}$, $L_{R2}$) abgelagerten Schweißraupen (B) ist und in einem Querschnitt orthogonal zu einer Längsrichtung der Schweißraupen (B), gebildet entlang des oberen Schichtpfads, Profile der nebeneinanderliegenden Schweißraupen (B) sich gegenseitig überlappen, **dadurch gekennzeichnet dass** in dem Schritt des Bestimmens der Schweißbedingungen der Schnittbereichspfade (Lc), wenn die Ablagerungsmenge der unteren Schicht (S1) durch S1 dargestellt wird und die Ablagerungsmenge der oberen Schicht (S2) durch S2 dargestellt wird, ein Verhältnis S1 / (S1 + S2) der Ablagerungsmenge der unteren Schicht S1 zu einer Gesamtablagerungsmenge (S1 + S2) abhängig von einem Abstand zwischen einer Mehrzahl der Schweißraupen (B) in dem Schnittabschnitt (CR) eingestellt wird.

2. Ablagerungsplanungsverfahren für ein additiv gefertigtes Objekt (25) nach Anspruch 1,
wobei in dem Schritt des Bestimmens der Schweißbedingungen der Schnittbereichspfade (Lc) sich die Ablagerungsmenge (S) durch Ändern einer Schweißrate des oberen Schichtpfads in den Schnittbereichspfaden (Lc), um langsamer zu sein als eine Schweißrate des unteren Schichtpfads, ändert.

3. Ablagerungsplanungsverfahren für ein additiv gefertigtes Objekt (25) nach Anspruch 2,
wobei in dem Prozess des Bildens der Schweißraupen (B) von dem Konstantbereich (RE) zu dem Schnittabschnitt (CR) die Änderung der Schweißrate von einer Position beginnt, die um eine Länge von einer Zentrumsposition des Schnittabschnitts (CR) zurückversetzt ist, die einer Hälfte einer Raupenbreite des Konstantbereichs (RE) orthogonal zu einer Längsrichtung der Raupe entspricht.

4. Ablagerungsplanungsverfahren für ein additiv gefertigtes Objekt (25) nach Anspruch 2,
wobei in einem Prozess des Bildens der Schweißraupen (B) von dem Konstantbereich (RE) zu dem Schnittabschnitt (CR) die Schweißrate sich so ändert, dass eine Position, die um eine Länge von einer Zentrumsposition des Schnittabschnitts (CR) zurückversetzt ist, die einer Hälfte einer Raupenbreite des Konstantbereichs (RE) orthogonal zu einer Längsrichtung der Raupe entspricht, eine Zentrumsposition in einem Bereich von einem Änderungsstartpunkt zu einem Änderungsendpunkt der Schweißrate ist.

5. Ablagerungsplanungsverfahren für ein additiv gefertigtes Objekt (25) nach einem der Ansprüche 2 bis 4,
wobei sich nicht nur die Schweißrate, sondern auch eine Zufuhrrate des Füllmetalls (M) ändert.

6. Ablagerungsplanungsverfahren für ein additiv gefertigtes Objekt (25) nach Anspruch 1,
wobei in dem Schritt des Bestimmens der Schweißbedingungen der Schnittbereichspfade (Lc) in den Schnittbereichspfaden (Lc) die Bildung der Schweißraupen (B) entlang des unteren Schichtpfads gestoppt wird und die Schweißraupen (B) nur entlang des oberen Schichtpfads gebildet werden.

7. Ablagerungsplanungsverfahren für ein additiv gefertigtes Objekt (25) nach Anspruch 6,
wobei zur Zeit eines Neustarts von dem Stopp der Bildung der Schweißraupen (B) eine Zufuhrrate des Füllmetalls (M) niedriger eingestellt wird als eine Zufuhrrate vor dem Stopp des Bildens der Schweißraupen (B), um von der niedrigen Rate zu der Zufuhrrate vor dem Stopp der Bildung graduell zu erhöhen.

8. Ablagerungsplanungsverfahren für ein additiv gefertigtes Objekt (25) nach Anspruch 7,

wobei von dem Neustart bis die Zufuhrrate des Füllmetalls (M) die Zufuhrrate vor dem Stopp der Bildung der Schweißraupen (B) erreicht, sich eine Schweißrate graduell von einer Schweißrate der Schnittbereichspfade (Lc) zu einer Schweißrate der Konstantbereichspfade ($L_{R1}$, $L_{R2}$) verringert.

9. Ablagerungsplanerstellungsvorrichtung, die einen Ablagerungsplan erstellt, in welchem ein additiv gefertigtes Objekt (25) unter Verwendung von Formdaten gebildet wird, die eine dreidimensionale Form des additiv gefertigten Objekts (25) darstellen, durch eine additive Fertigungsvorrichtung (11), die Schweißraupen (B) ablagert, die durch Schmelzen und Erstarren eines Füllmetalls (M) erhalten werden, wobei die Ablagerungsplanerstellungsvorrichtung umfasst:

eine Datenerfassungseinheit (33), eingerichtet um die Formdaten zu erfassen;
eine Schweißpfadbestimmungseinheit (35), eingerichtet um eine Mehrzahl von Schweißpfaden zu bestimmen, entlang welcher jede der Schichten, geschnitten aus der dreidimensionalen Form des additiv gefertigten Objekts (25), dargestellt durch die Formdaten, unter Verwendung der Schweißraupen (B) gebildet wird;
eine Schweißpfadklassifizierungseinheit (37), eingerichtet um die Mehrzahl der Schweißpfade in derselben Schicht jeder der Schichten in Schnittbereichspfade (Lc) zu klassifizieren, die einem Schnittabschnitt (CR) entsprechen, und Konstantbereichspfade ($L_{R1}$, $L_{R2}$), die Konstantabschnitten (RE) anders als der Schnittabschnitt (CR) entsprechen, wobei der Schnittabschnitt (CR) durch Schnitt eines Abschnitts, an welchem eine Mehrzahl der Schweißraupen (B) nebeneinander gebildet wird, mit einer anderen Mehrzahl der Schweißraupen (B) gebildet wird;
eine Ober- und Unterschichtteilungseinheit (39), eingerichtet zum Teilen jeder der Schnittbereichspfade (LC) in einen unteren Schichtpfad, entlang welchem eine untere Schicht des Schnittabschnitts (CR) gebildet wird, und einen oberen Schichtpfad, entlang welchem eine obere Schicht des Schnittabschnitts (CR) gebildet wird; und
eine Schweißbedingungsbestimmungseinheit (41), eingerichtet um Schweißbedingungen der Schnittbereichspfade (Lc) zu bestimmen, so dass eine Ablagerungsmenge der oberen Schicht (S2) pro Längeneinheit der entlang des oberen Schichtpfads gebildeten Schweißraupen (B) größer ist als eine Ablagerungsmenge der unteren Schicht (S1) pro Längeneinheit der entlang des unteren Schichtpfads gebildeten Schweißraupen (B), eine Summe der Ablagerungsmenge der oberen Schicht (S2) und der Ablagerungsmenge der unteren Schicht (S1) gleich einer Ablagerungsmenge (S) pro Längeneinheit der entlang der Konstantbereichspfade ($L_{R1}$, $L_{R2}$) abgelagerten Schweißraupen (B) ist und in einem Querschnitt orthogonal zu einer Längsrichtung der Schweißraupen (B), gebildet entlang des oberen Schichtpfads, Profile der nebeneinanderliegenden Schweißraupen (B) sich gegenseitig überlappen, **dadurch gekennzeichnet dass**
die Schweißbedingungsbestimmungseinheit (41) eingerichtet ist, um Schweißbedingungen der Schnittbereichspfade (Lc) zu bestimmen, so dass, wenn die Ablagerungsmenge der unteren Schicht (S1) durch S1 dargestellt wird und die Ablagerungsmenge der oberen Schicht (S2) durch S2 dargestellt wird, ein Verhältnis S1 / (S1 + S2) der Ablagerungsmenge der unteren Schicht S1 zu einer Gesamtablagerungsmenge (S1 + S2) abhängig von einem Abstand zwischen einer Mehrzahl der Schweißraupen (B) in dem Schnittabschnitt (CR) eingestellt wird.

10. Programm, das einen Computer veranlasst, ein additives Fertigungsverfahren für ein additiv gefertigtes Objekt (25) auszuführen, in welchem das additiv gefertigte Objekt (25) unter Verwendung von Formdaten gebildet wird, die eine dreidimensionale Form des additiv gefertigten Objekts (25) darstellen, durch eine additive Fertigungsvorrichtung (11), die Schweißraupen (B) ablagert, die durch Schmelzen und Erstarren eines Füllmetalls (M) erhalten werden, wobei das additive Fertigungsverfahren umfasst:

eine Funktion des Erfassens der Formdaten;
eine Funktion des Bestimmens einer Mehrzahl von Schweißpfaden, entlang welcher jede der Schichten, geschnitten aus der dreidimensionalen Form des additiv gefertigten Objekts (25), dargestellt durch die Formdaten, unter Verwendung der Schweißraupen (B) gebildet wird;
eine Funktion des Klassifizierens der Mehrzahl der Schweißpfade in derselben Schicht jeder der Schichten in Schnittbereichspfade (Lc), die einem Schnittabschnitt (CR) entsprechen, und Konstantbereichspfade ($L_{R1}$, $L_{R2}$), die Konstantabschnitten (RE) anders als der Schnittabschnitt (CR) entsprechen, wobei der Schnittabschnitt (CR) durch Schnitt eines Abschnitts, an welchem eine Mehrzahl der Schweißraupen (B) nebeneinander gebildet wird, mit einer anderen Mehrzahl der Schweißraupen (B) gebildet wird; und
eine Funktion des Bestimmens von Schweißbedingungen der Schnittbereichspfade (Lc), so dass eine Ablagerungsmenge der oberen Schicht (S2) pro Längeneinheit der entlang des oberen Schichtpfads gebildeten Schweißraupen (B) größer ist als eine Ablagerungsmenge der unteren Schicht (S1) pro Längeneinheit der entlang des unteren Schichtpfads gebildeten Schweißraupen (B), eine Summe der Ablagerungsmenge der oberen Schicht (S2) und der Ablagerungsmenge der unteren Schicht (S1) gleich einer Ablagerungsmenge (S) pro Längeneinheit der entlang der Konstantbereichspfade ($L_{R1}$, $L_{R2}$) abgelagerten Schweißraupen (B) ist und in einem Querschnitt orthogonal zu einer Längsrichtung der Schweißraupen (B), gebildet entlang des oberen Schichtpfads, Profile der nebeneinanderliegenden Schweißraupen (B) sich gegenseitig überlappen, **dadurch gekennzeichnet dass**

die Funktion des Bestimmens der Schweißbedingungen der Schnittbereichspfade (Lc) eingerichtet ist, so dass, wenn die Ablagerungsmenge der unteren Schicht (S1) durch S1 dargestellt wird und die Ablagerungsmenge der oberen Schicht (S2) durch S2 dargestellt wird, ein Verhältnis S1 / (S1 + S2) der Ablagerungsmenge der unteren Schicht S1 zu einer Gesamtablagerungsmenge (S1 + S2) abhängig von einem Abstand zwischen einer Mehrzahl der Schweißraupen (B) in dem Schnittabschnitt (CR) eingestellt wird.

**Revendications**

1. Procédé de planification de dépôt pour un objet fabriqué de manière additive (25), dans lequel l'objet fabriqué de manière additive (25) est formé en utilisant des données de forme représentant une forme tridimensionnelle de l'objet fabriqué de manière additive (25) par un appareil de fabrication additive (11) qui dépose des cordons de soudure (B) obtenus en faisant fondre et solidifiant un métal d'apport (M), le procédé de planification de dépôt comprenant :

   une étape d'acquisition des données de forme ;
   une étape de détermination d'une pluralité de trajets de soudage le long desquels chacune de couches tranchées à partir de la forme tridimensionnelle de l'objet fabriqué de manière additive (25) représentée par les données de forme est formée en utilisant les cordons de soudure (B) ;
   une étape de classification de la pluralité des trajets de soudage dans la même couche de chacune des couches en trajets de région d'intersection ($L_C$) correspondant à une portion d'intersection (CR) et trajets de région constante ($L_{R1}$, $L_{R2}$) correspondant à des portions constantes (RE) autres que la portion d'intersection (CR), la portion d'intersection (CR) étant formée par l'intersection d'une portion où une pluralité des cordons de soudure (B) sont formés de manière adjacente l'un à l'autre avec une autre pluralité des cordons de soudure (B) ;
   une étape de division de chacun des trajets de région d'intersection ($L_C$) en un trajet de couche inférieure le long duquel une couche inférieure de la portion d'intersection (CR) est formée et un trajet de couche supérieure le long duquel une couche supérieure de la portion d'intersection (CR) est formée ; et
   une étape de détermination de conditions de soudage des trajets de région d'intersection ($L_C$) de sorte qu'une quantité de dépôt de couche supérieure (S2) par longueur unitaire de cordons de soudure (B) formés le long du trajet de couche supérieure est supérieure à une quantité de dépôt de couche inférieure (S1) par longueur unitaire de cordons de soudure (B) formés le long du trajet de couche inférieure, une somme de la quantité de dépôt de couche supérieure (S2) et la quantité de dépôt de couche inférieure (S1) est égale à une quantité de dépôt (S) par longueur unitaire de cordons de soudure (B) formés le long des trajets de région constante ($L_{R1}$, $L_{R2}$), et dans une coupe transversale orthogonale à une direction longitudinale des cordons de soudure (B) formés le long du trajet de couche supérieure, des profils des cordons de soudure (B) adjacents l'un à l'autre se chevauchent l'un l'autre, **caractérisé en ce que** dans l'étape de détermination des conditions de soudage des trajets de région d'intersection ($L_C$), lorsque la quantité de dépôt de couche inférieure (S1) est représentée par S1 et la quantité de dépôt de couche supérieure (S2) est représentée par S2, un rapport S1 / (S1 + S2) de la quantité de dépôt de couche inférieure S1 sur une quantité de dépôt totale (S1 + S2) est défini en fonction d'un espace entre une pluralité des cordons de soudure (B) dans la portion d'intersection (CR).

2. Procédé de planification de dépôt d'un objet fabriqué de manière additive (25) selon la revendication 1, dans lequel dans l'étape de détermination des conditions de soudage des trajets de région d'intersection ($L_C$), la quantité de dépôt (S) change en changeant un taux de soudage du trajet de couche supérieure dans les trajets de région d'intersection ($L_C$) pour être plus lent qu'un taux de soudage du trajet de couche inférieure.

3. Procédé de planification de dépôt d'un objet fabriqué de manière additive (25) selon la revendication 2, dans lequel dans le processus de formation des cordons de soudure (B) de la portion constante (RE) à la portion d'intersection (CR), le changement du taux de soudage démarre d'une position déplacée vers l'arrière depuis une position centrale de la portion d'intersection (CR) d'une longueur qui est la moitié d'une largeur de cordon de la portion constante (RE) orthogonale à une direction longitudinale de cordon.

4. Procédé de planification de dépôt d'un objet fabriqué de manière additive (25) selon la revendication 2, dans lequel dans le processus de formation des cordons de soudure (B) de la portion constante (RE) à la portion d'intersection (CR), le taux de soudage change de sorte qu'une position déplacée vers l'arrière depuis une position centrale de la portion d'intersection (CR) d'une longueur qui est la moitié d'une largeur de cordon de la portion constante (RE) orthogonale à une direction longitudinale de cordon est une position centrale dans une plage d'un point de départ de changement à un point final de changement du taux de soudage.

5. Procédé de planification de dépôt d'un objet fabriqué de manière additive (25) selon l'une quelconque des revendications 2 à 4,
dans lequel non seulement le taux de soudage mais aussi un taux d'alimentation du métal d'apport (M) changent.

6. Procédé de planification de dépôt d'un objet fabriqué de manière additive (25) selon la revendication 1,
dans lequel dans l'étape de détermination des conditions de soudage des trajets de région d'intersection ($L_C$), dans les trajets de région d'intersection ($L_C$), la formation des cordons de soudure (B) le long du trajet de couche inférieure est arrêtée et les cordons de soudure (B) sont formés uniquement le long du trajet de couche supérieure.

7. Procédé de planification de dépôt d'un objet fabriqué de manière additive (25) selon la revendication 6,
dans lequel au moment de redémarrer à partir de l'arrêt de la formation des cordons de soudure (B), un taux d'alimentation du métal d'apport (M) est défini pour être inférieur à un taux d'alimentation avant l'arrêt de la formation des cordons de soudure (B) pour augmenter progressivement du faible taux au taux d'alimentation avant l'arrêt de la formation.

8. Procédé de planification de dépôt d'un objet fabriqué de manière additive (25) selon la revendication 7,
dans lequel jusqu'à ce que le taux d'alimentation du métal d'apport (M) atteigne le taux d'alimentation avant l'arrêt de la formation des cordons de soudure (B) à partir du redémarrage, un taux de soudage diminue progressivement d'un taux de soudage des trajets de région d'intersection ($L_C$) à un taux de soudage des trajets de région constante ($L_{R1}$, $L_{R2}$).

9. Appareil de réalisation de plan de dépôt qui réalise un plan de dépôt dans lequel un objet fabriqué de manière additive (25) est formé en utilisant des données de forme représentant une forme tridimensionnelle de l'objet fabriqué de manière additive (25) par un appareil de fabrication additive (11) qui dépose des cordons de soudure (B) obtenus en faisant fondre et solidifiant un métal d'apport (M), l'appareil de réalisation de plan de dépôt comprenant :

un module d'acquisition de données (33) configuré pour acquérir les données de forme ;
un module de détermination de trajet de soudage (35) configuré pour déterminer une pluralité de trajets de soudage le long desquels chacune de couches tranchées à partir de la forme tridimensionnelle de l'objet fabriqué de manière additive (25) représentée par les données de forme est formée en utilisant les cordons de soudure (B) ;
un module de classification de trajet de soudage (37) configuré pour classifier la pluralité des trajets de soudage dans la même couche de chacune des couches en trajets de région d'intersection ($L_C$) correspondant à une portion d'intersection (CR) et trajets de région constante ($L_{R1}$, $L_{R2}$) correspondant à des portions constantes (RE) autres que la portion d'intersection (CR), la portion d'intersection (CR) étant formée par l'intersection d'une portion où une pluralité des cordons de soudure (B) sont formés de manière adjacente l'un à l'autre avec une autre pluralité des cordons de soudure (B) ;
un module de division de couche supérieure et inférieure (39) configuré pour diviser chacun des trajets de région d'intersection ($L_C$) en un trajet de couche inférieure le long duquel une couche inférieure de la portion d'intersection (CR) est formée et un trajet de couche supérieure le long duquel une couche supérieure de la portion d'intersection (CR) est formée ; et
un module de détermination de conditions de soudage (41) configuré pour déterminer des conditions de soudage des trajets de région d'intersection ($L_C$) de sorte qu'une quantité de dépôt de couche supérieure (S2) par longueur unitaire de cordons de soudure (B) formés le long du trajet de couche supérieure est supérieure à une quantité de dépôt de couche inférieure (S1) par longueur unitaire de cordons de soudure (B) formés le long du trajet de couche inférieure,
une somme de la quantité de dépôt de couche supérieure (S2) et la quantité de dépôt de couche inférieure (S1) est égale à une quantité de dépôt (S) par longueur unitaire de cordons de soudure (B) formés le long des trajets de région constante ($L_{R1}$, $L_{R2}$), et dans une coupe transversale orthogonale à une direction longitudinale des cordons de soudure (B) formés le long du trajet de couche supérieure, des profils des cordons de soudure (B) adjacents l'un à l'autre se chevauchent l'un l'autre, **caractérisé en ce que**
le module de détermination de conditions de soudage (41) est configuré pour déterminer des conditions de soudage des trajets de région d'intersection ($L_C$) de sorte que, lorsque la quantité de dépôt de couche inférieure (S1) est représentée par S1 et la quantité de dépôt de couche supérieure (S2) est représentée par S2,

un rapport S1 / (S1 + S2) de la quantité de dépôt de couche inférieure S1 sur une quantité de dépôt totale (S1 + S2) est défini en fonction d'un espace entre une pluralité des cordons de soudure (B) dans la portion d'intersection (CR).

10. Programme amenant un ordinateur à exécuter une procédure de fabrication additive pour un objet fabriqué de manière additive (25), dans lequel l'objet fabriqué de manière additive (25) est formé en utilisant des données de forme représentant une forme tridimensionnelle de l'objet fabriqué de manière additive (25) par un appareil de fabrication additive (11) qui dépose des cordons de soudure (B) obtenus en faisant fondre et solidifiant un métal d'apport (M), la procédure de fabrication additive comprenant :

une fonction d'acquisition des données de forme ;

une fonction de détermination d'une pluralité de trajets de soudage le long desquels chacune de couches tranchées à partir de la forme tridimensionnelle de l'objet fabriqué de manière additive (25) représentée par les données de forme est formée en utilisant les cordons de soudure (B) ;

une fonction de classification de la pluralité des trajets de soudage dans la même couche de chacune des couches en trajets de région d'intersection ($L_C$) correspondant à une portion d'intersection (CR) et trajets de région constante ($L_{R1}$, $L_{R2}$) correspondant à des portions constantes (RE) autres que la portion d'intersection (CR), la portion d'intersection (CR) étant formée par l'intersection d'une portion où une pluralité des cordons de soudure (B) sont formés de manière adjacente l'un à l'autre avec une autre pluralité des cordons de soudure (B) ;

une fonction de division de chacun des trajets de région d'intersection ($L_C$) en un trajet de couche inférieure le long duquel une couche inférieure de la portion d'intersection (CR) est formée et un trajet de couche supérieure le long duquel une couche supérieure de la portion d'intersection (CR) est formée ; et

une fonction de détermination de conditions de soudage des trajets de région d'intersection ($L_C$) de sorte qu'une quantité de dépôt de couche supérieure (S2) par longueur unitaire de cordons de soudure (B) formés le long du trajet de couche supérieure est supérieure à une quantité de dépôt de couche inférieure (S1) par longueur unitaire de cordons de soudure (B) formés le long du trajet de couche inférieure, une somme de la quantité de dépôt de couche supérieure (S2) et la quantité de dépôt de couche inférieure (S1) est égale à une quantité de dépôt (S) par longueur unitaire de cordons de soudure (B) formés le long des trajets de région constante ($L_{R1}$, $L_{R2}$), et dans une coupe transversale orthogonale à une direction longitudinale des cordons de soudure (B) formés le long du trajet de couche supérieure, des profils des cordons de soudure (B) adjacents l'un à l'autre se chevauchent l'un l'autre, **caractérisé en ce que**

la fonction de détermination de conditions de soudage des trajets de région d'intersection ($L_C$) est configurée de sorte que, lorsque la quantité de dépôt de couche inférieure (S1) est représentée par S1 et la quantité de dépôt de couche supérieure (S2) est représentée par S2, un rapport S1 / (S1 + S2) de la quantité de dépôt de couche inférieure S1 sur une quantité de dépôt totale (S1 + S2) est défini en fonction d'un espace entre une pluralité des cordons de soudure (B) dans la portion d'intersection (CR).

# FIG. 1

| CONTROL UNIT | DEPOSITION PLANNING UNIT |
| STORAGE UNIT |

POWER SUPPLY DEVICE

*FIG. 2*

# FIG. 3

27

DEPOSITION PLANNING UNIT

SHAPE DATA → DATA ACQUISITION UNIT — 33

WELDING PATH
DETERMINATION UNIT — 35

WELDING PATH
CLASSIFICATION UNIT — 37

UPPER AND LOWER LAYER
DIVISION UNIT — 39

WELDING CONDITION
DETERMINATION UNIT — 41

DRIVING PROGRAM

*FIG. 4A*

*FIG. 4B*

## FIG. 5

*FIG. 6*

*FIG. 7*

*FIG. 8*

# FIG. 9

# FIG. 10

START

READ SHAPE DATA — St.1

SLICE SHAPE MODEL INTO LAYERS AND
DETERMINE WELDING PATHS — St.2

CLASSIFY FORMED REGION INTO CONSTANT
PORTIONS AND INTERSECTION PORTION — St.3

SET WELDING CONDITIONS OF CONSTANT PORTION — St.4

CALCULATE THRESHOLD R OF RATIO S1 / (S1 + S2)
OF INTERSECTION PORTION — St.5

TEMPORARILY SET S1 AND S2 WHERE S1 / (S1 + S2)
< R AS TARGET VALUES — St.6

St.11
DECREASE FEEDING RATE OF FILLER METAL

CALCULATE WELDING RATE V1
CORRESPONDING TO SET S1 — St.7

St.9
INCREASE S1

St.8
V1 < Vmax ?    NO

YES

St.10
S1 / (S1 + S2) < R ?    NO

YES

SET S1 AND S2 AND DETERMINE WELDING CONDITIONS — St.12

END

EP 4 275 832 B1

## FIG. 11

## FIG. 12

## FIG. 13

UPPER
LAYER

HEIGHT

POSITION

S1 / (S1+S2) = 0.38

LOWER
LAYER

HEIGHT

POSITION

## FIG. 14

UPPER
LAYER

HEIGHT

POSITION

S1 / (S1+S2) = 0.41

LOWER
LAYER

HEIGHT

POSITION

# FIG. 15

## FIG. 16

## FIG. 17A

## FIG. 17B

# FIG. 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010201474 A
- JP 2019111582 A
- CN 111037051 A